Europäisches Patentamt

European Patent Office

Office européen des brevets

(19)

(11) Veröffentlichungsnummer: **0 1 1 3 408**
**B1**

(12) **EUROPÄISCHE PATENTSCHRIFT**

(45) Veröffentlichungstag der Patentschrift:
12.03.86

(21) Anmeldenummer: 83111320.4

(22) Anmeldetag: 12.11.83

(51) Int. Cl.⁴: **E 21 B 41/02,** C 02 F 5/10,
C 02 F 1/50

(54) **Verwendung von Polykondensationsprodukten aus Acrolein und Formaldehyd zur Beseitigung von Schwefelwasserstoff und Eisensulfid in wässrigen Systemen.**

(30) Priorität: **07.12.82 DE 3245139**

(43) Veröffentlichungstag der Anmeldung:
**18.07.84 Patentblatt 84/29**

(45) Bekanntmachung des Hinweises auf die Patenterteilung:
**12.03.86 Patentblatt 86/11**

(84) Benannte Vertragsstaaten:
**AT BE CH FR GB IT LI LU NL SE**

(56) Entgegenhaltungen:
**EP - A - 0 087 509**
**GB - A - 2 023 123**
**US - A - 2 696 477**
**US - A - 2 987 475**
**US - A - 3 562 157**

(73) Patentinhaber: **Degussa Aktiengesellschaft,**
**Weissfrauenstrasse 9, D-6000 Frankfurt am Main 1 (DE)**

(72) Erfinder: **Merk, Wolfgang, Dr. Dipl.-Chem.,**
**3-35-19 Denechofu, Ota-ku Tokyo 145 (JP)**
Erfinder: **Rink, Karl-Heinz, Dr. Dipl.-Chem.,**
**Röntgenstrasse 36, D-6450 Hanau 1 (DE)**

ACTORUM AG

## Beschreibung

Gegenstand der Erfindung ist die Verwendung von Polykondensationsprodukten, welche durch Kondensation von Acrolein und Formaldehyd im molaren Verhältnis zwischen 1:1 und 1:10 in wässerigem oder wässerig-organischem Medium in Gegenwart eines basischen Katalysators hergestellt worden sind, zur Beseitigung von Schwefelwasserstoff und Eisensulfid in wässerigen Systemen.

Es ist bereits bekannt, Acrolein zur Entfernung von Schwefelwasserstoff aus wässerigen Systemen zu verwenden, um eine Desodorierung zu erreichen und um im Zusammenwirken mit Kohlendioxid Korrosionen an Metallen durch saure Gase zu verhindern oder möglichst klein zu halten. Die Wirksamkeit des Acroleins ist zwar gut, seine Anwendung hat jedoch auch beträchtliche Nachteile, vor allem wegen seines ausserordentlich stechenden Geruchs schon in geringsten Konzentrationen und wegen seines niedrigen Flammpunktes. Auch bereitet es ziemliche Schwierigkeiten, geringe Mengen von Acrolein innerhalb kurzer Zeit homogen in Wasser zu verteilen, obwohl Acrolein zu etwa 18% in Wasser löslich ist.

Es wurde nun gefunden, dass die mit der Verwendung des Acroleins zur Beseitigung von Schwefelwasserstoff aus wässerigen Systemen verbundenen Nachteile vermieden werden können, wenn man an seiner Stelle niedermolekulare wasserlösliche Polykondensationsprodukte aus Acrolein und Formaldehyd einsetzt.

Die Anwendung dieser Polykondensationsprodukte gestaltet sich sehr einfach, weil sie leicht mit Wasser verdünnbar sind. Ausserdem sind sie wesentlich geruchsärmer als Acrolein. Ihre Wirksamkeit zur Beseitigung des Schwefelwasserstoffs erreicht etwa die des Acroleins, ebenso ist die Reaktionsgeschwindigkeit bei der Addition des Schwefelwasserstoffs ähnlich der des Acroleins. Ausserdem ist die Toxizität der Polykondensate wesentlich geringer als die von Acrolein, wie ein Vergleich der $LD_{50}$-Werte, beide auf 100% Wirkstoff bezogen, zeigt:

$LD_{50}$ von Acrolein: 42 mg/kg (Ratte, oral);

$LD_{50}$ eines Polykondensats aus Acrolein und Formaldehyd im molaren Verhältnis 1:4:830 mg/kg (Ratte, oral).

Die erfindungsgemäss zu verwendenden Polykondensationsprodukte werden hergestellt durch Kondensation von Acrolein und Formaldehyd im molaren Verhältnis zwischen 1:1 und 1:10, vorzugsweise zwischen 1:2 und 1:4, in wässerigem oder wässerig-organischem Medium in Gegenwart eines basischen Katalysators.

Geeignete basische Katalysatoren sind beispielsweise die Hydroxide oder Carbonate von Natrium oder Kalium und Ammoniak. Besonders geeignet sind primäre, sekundäre oder tertiäre Amine. Vorzugsweise wird Piperidin verwendet. Die Katalysatoren werden in einer Menge zwischen 0,1 und 5, vorzugsweise zwischen 0,5 und 1 Gew.-% bezogen auf das Gewicht des eingesetzten Acroleins und Formaldehyds, verwendet.

Der Formaldehyd kann sowohl in Form einer wässerigen Formaldehydlösung als auch in Form von Paraformaldehyd, dann unter Zusatz von Wasser, eingesetzt werden.

In manchen Fällen ist es vorteilhaft, die Kondensationsreaktion in zusätzlicher Gegenwart von wasserlöslichen ein- oder mehrwertigen Alkoholen und/oder Säureamiden vorzunehmen. Die Alkohole und Säureamide können in Mengen bis zu 1 mol/Mol eingesetztem Acrolein zugesetzt werden und werden zumindest teilweise in das entstehende Polykondensationsprodukt eingebaut. Geeignete Alkohole sind beispielsweise Methanol, Ethanol, n-Propanol, Isopropylalkohol, Ethylenglykol, 1,4-Butandiol, Triethylenglykol und andere wasserlösliche Polyglykole. Besonders geeignet ist Allylalkohol. Geeignete Amide sind beispielsweise Acetamid, Harnstoff oder Caprolactam. Besonders geeignet ist Formamid.

Bevorzugt ist — sowohl aus wirtschaftlichen als auch aus Wirksamkeits Gründen — die Verwendung von Polykondensaten, die allein aus Acrolein und Formaldehyd im molaren Verhältnis 1:4 hergestellt worden sind.

Die Kondensationsreaktion verläuft stark exotherm. Relativ kleine Ansätze können zwar in der Weise vorgenommen werden, dass man die Reaktionsteilnehmer vermischt und dann den Katalysator hinzufügt, bei grösseren Ansätzen ist es jedoch empfehlenswerter, nur einen Teil der Reaktionsteilnehmer oder Wasser oder einen Alkohol zusammen mit dem Katalysator vorzulegen und den Rest der Reaktionsteilnehmer langsam portionsweise oder kontinuierlich mit solcher Geschwindigkeit zuzufügen, dass die freiwerdende Reaktionswärme problemlos abgeführt werden kann.

Für die erfindungsgemässe Verwendung als Fänger für Schwefelwasserstoff, der auch ggf. bereits entstandenem Eisensulfid entzogen wird, werden die bei der Kondensationsreaktion gebildeten Polykondensationsprodukte in Form der erhaltenen wässerigen oder wässerig-organischen Lösung unmittelbar eingesetzt. Die Anwendungskonzentration liegen, berechnet als Feststoff, im Bereich zwischen etwa 1 und etwa 2000 ppm. Diese Wirksamkeitskonzentration, bereits mit wenigen Parts per million beginnend, ist eine Anwendungsforderung der Praxis, um erfolgreich dem Einsetzen von Korrosionserscheinungen entgegenzuwirken.

Natürlich sind auch grössere Konzentrationen als 2000 ppm ohne weiteres anwendbar, aber aus wirtschaftlichen Gründen nicht sinnvoll. Üblicherweise werden die Polykondensationsprodukte in einer Konzentration zwischen 5 und 500 ppm angewandt. Nur wenn die Korrosion bereits eingesetzt hat und Eisensulfid bereits gebildet wurde, kann bis zum Abbau dieses Eisensulfides durch Schwefelwasserstoffentzug und Hydrolyse zu Eisenhydroxid für die Zeit einiger Wochen höher dosiert werden, beispielsweise im Bereich zwischen 1000 und 2000 ppm. Wenn sich dann der angestrebte Erfolg der Behandlung eingestellt hat, kann die Konzentration wieder entsprechend zurückgenommen werden.

Die erfindungsgemäss zu verwendenden Polykondensationsprodukte sind auch als Biocide wirksam (vgl. unsere prioritätsältere, am 7. 9. 1983 veröffentlichte EP-A-0087509) und vernichten als solche auch im Wasser lebende sulfatreduzierende Bakterien. Als Fänger für Schwefelwasserstoff entfernen sie aber auch eventuell in kleinen Mengen dennoch gebildeten Schwefelwasserstoff und verhindern damit eine Korrosion unter Eisensulfidbildung.

Eine solche Korrosionsverhinderung ist insbesondere im Erdölförderbereich von grosser Wichtigkeit, um wertvolle Fördereinrichtungen zu schützen und ihre Lebensdauer und, z.B. bei Fördersonden, sogar die Erdölfeld-Förderausbeute zu erhöhen.

Das ohne Schutzmassnahmen der genannten Art entstehende Eisensulfid kann ggf. in feiner Verteilung abgeschwemmt werden und bei geologisch porösem Lagerstättengestein des Erdölfeldes dieses Gestein teilweise oder sogar vollständig verstopfen. Dadurch wird die förderbare Erdölmenge verringert und bei völliger Feldverstopfung die Förderung ganz verhindert. Um das mit hohem Aufwand erschlossene Erdölfeld für die Ölförderung nicht zu verlieren, sind korrosionsverursachende Feldsäuerungen notwendig, um die Eisensulfidverstopfung zu beseitigen, was natürlich bei Anwendung der hier beschriebenen Verfahrensweise nicht notwendig ist.

Auch in anderen Anwendungsbereichen, wo durch Fäulnisprozesse Schwefelwasserstoff entstehen kann z.B. in Abwasserkläranlagen, kann durch Einsatz der Polykondensate sowohl die Bildung von Schwefelwasserstoff verhindert als auch in Kleinmengen dennoch gebildeter Schwefelwasserstoff durch Reaktion dem Abwassersystem entzogen werden. Neben der natürlich auch in diesem Bereich erwünschten Korrosionsverhinderung ergeben sich noch als weitere erwünschte Ergebnisse eine Entgiftung und Desodorierung des Abwassers. Da kommunale Kläranlagen oftmals in der Nähe bewohnter Ansiedlungen gelegen sind, bedeutet die Geruchfreimachung der Abwässer in hohem Masse Umweltschutz für die Umgebung.

In den nachfolgenden Beispielen wird die Herstellung eines erfindungsgemäss zu verwendenden Polykondensationsprodukts und die Prüfung von dessen Wirksamkeit zur Schwefelwasserstoff- und/oder Eisensulfidentfernung erläutert. Prozentangaben bedeuten, sofern nicht anders angegeben, Gewichtsprozente.

*Beispiel 1*

In einer mit Rührer versehenen 250-cm³-Rundkolben-Rückflusskühler-Apparatur werden 72,6 cm³ einer wässerigen Formaldehydlösung (Gehalt 37%, Dichte 1,116) = 1 mol und 0,5 cm³ Piperidin vorgelegt und auf 70° C vorgewärmt. Unter Rühren wird ein homogenes Gemisch aus 34,5 cm³ Acrolein (Reinheit 96%, Dichte 0,845) = ½ mol und weiteren 72,6 cm³ der obigen Formaldehydlösung = 1 mol mit solcher Geschwindigkeit zugetropft, dass eine maximale Temperatur von 80° C erreicht, aber nicht überschritten wird. Dafür ist eine Zeit von 3 min erforderlich. Anschliessend wird noch 1 h lang bei 80° C gerührt und dann auf Raumtemperatur abgekühlt.

Das so erhaltene Polykondensationsprodukt aus Acrolein und Formaldehyd im molaren Verhältnis 1 : 4 wird auf seine Wirksamkeit zur Schwefelwasserstoff- und/oder Eisensulfidentfernung in verschiedenen Konzentrationen geprüft.

In 100 cm³ destilliertem Wasser werden nach der Methode stufenweiser Verdünnung aus ursprünglich höherkonzentrierter Lösung 1,2 mg Natriumsulfid · 9H$_2$O (M = 240) gelöst und durch Zusatz von 0,36 mg Salzsäure (M = 36) wird daraus die stöchiometrische Menge von 0,17 mg = 1,7 ppm Schwefelwasserstoff freigesetzt. Die kleine Menge Schwefelwasserstoff ist am Geruch deutlich zu erkennen.

Zu dieser Lösung werden durch entsprechende Verdünnung jetzt 1,76 mg des Lösungspolykondensats zugesetzt. Dieser Polykondensatmenge entspricht eine ursprünglich eingesetzte Acroleinmenge von 0,56 mg, freies Acrolein ist aber nicht mehr vorhanden.

Innerhalb 2 bis 3 d bei Raumtemperatur verschwindet der Schwefelwasserstoffgeruch vollständig, und es entsteht eine geruchfreie Lösung. Der Schwefelwasserstoff wird selbst in dieser niedrigen Konzentration praktisch quantitativ unter Desodorierung an das Acrolein/Formaldehyd-Polykondensat gebunden.

*Beispiel 2*

Es wird in 100 cm³ destilliertem Wasser unter analogen Bedingungen gearbeitet wie im Beispiel 1, jedoch wird zusätzlich zu 1,2 mg Natriumsulfid · 9H$_2$O (M = 240) und 0,36 mg Salzsäure (M = 36) durch geeignete Verdünnungszugabe eine Menge von 1,4 mg Eisensulfat (FeSO$_4$ · 7H$_2$O, M = 278) gelöst. Unter diesen Bedingungen bildet sich Eisensulfid, das allerdings nicht ausgefällt wird, weil in der angewandten niedrigen Konzentration dessen Löslichkeitsprodukt noch nicht überschritten wird. Die Lösung riecht nach Schwefelwasserstoff, der offenbar im Gleichgewicht mit Eisensulfid vorliegt.

Analog Beispiel 1 werden wiederum durch entsprechende Verdünnung 1,76 mg des Lösungspolykondensats zugegeben, in dem eine umgesetzte Acroleinmenge von 0,56 mg enthalten ist.

Durch Reaktion des Schwefelwasserstoffs mit dem Polykondensat, auch aus dem im Gleichgewicht vorliegenden Eisensulfid, entsteht in 2 d bei 20° C eine geruchfreie Lösung.

*Beispiel 3*

In 100 cm³ destilliertem Wasser werden nach der Methode stufenweiser Verdünnung aus ursprünglich höherkonzentrierter Lösung 12 mg Natriumsulfid · 9H$_2$O (M = 240) gelöst und durch Zusatz von 3,6 mg Salzsäure (M = 36) wird daraus die stöchiometrische Menge von 1,7 mg = 17 ppm Schwefelwasserstoff freigesetzt. Der Schwefelwasserstoff ist am Geruch in dieser Konzentration deutlich erkennbar.

Zu dieser Lösung werden jetzt 17,6 mg des Lösungspolykondensats von Beispiel 1 zugesetzt. Diese Menge entspricht einer zur Polykondensatherstellung eingesetzten Acroleinmenge von 5,6 mg, freies Acrolein ist jedoch nicht mehr vorhanden.

Innerhalb 2 d bei Raumtemperatur verschwindet der Schwefelwasserstoffgeruch vollständig, und es entsteht eine geruchsfreie Lösung. Der Schwefelwasserstoff wird praktisch quantitativ unter Desodorierung an das Acrolein/Formaldehyd-Polykondensat gebunden.

*Beispiel 4*

Es wird in 100 cm³ destilliertem Wasser unter analogen Bedingungen gearbeitet wie in Beispiel 3, jedoch wird zusätzlich zu 12 mg Natriumsulfid · 9$H_2$O (M = 240) und 3,6 mg Salzsäure (M = 36) eine Menge von 14 mg Eisensulfat ($FeSO_4$ · 7$H_2$O, M = 278) durch geeignete Verdünnungszugabe gelöst. Unter diesen Bedingungen bildet sich Eisensulfid als feinteilige schwarze Fällung. Die Lösung riecht auch weiterhin noch nach Schwefelwasserstoff, der noch im Gleichgewicht neben Eisensulfid vorliegt.

Analog Beispiel 3 werden wiederum durch entsprechende Verdünnung 17,6 mg des Lösungspolykondensats zugegeben. Zur Herstellung dieser Polykondensatmenge wurden 5,6 mg Acrolein benötigt.

Durch Reaktion des Schwefelwasserstoffs mit dem Polykondensat, auch aus dem im Gleichgewicht vorliegenden Eisensulfid (FeS), entsteht nach 2 d bei 20° C eine geruchsfreie Lösung. Das Eisensulfid geht hierbei durch Hydrolyse in Eisenhydroxid über, das in der niedrigen Konzentration jedoch in dem vorhandenen Wasser löslich ist.

*Beispiel 5*

In 100 cm³ destilliertem Wasser werden nach der Methode stufenweiser Verdünnung aus ursprünglich höherkonzentrierter Lösung 120 mg Natriumsulfid (Na$_2$S · 9$H_2$O, M = 240) gelöst und durch Zusatz von 36 mg Salzsäure (M = 36) wird daraus die stöchiometrische Menge von 17 mg = 170 ppm Schwefelwasserstoff freigesetzt. Der entstandene Schwefelwasserstoff ist am intensiven Geruch erkennbar.

Zu dieser Lösung werden jetzt 176 mg des Lösungspolykondensats von Beispiel 1 zugesetzt. Zur Herstellung dieser Polykondensatmenge wurden 56 mg Acrolein (M = 56) benötigt, freies Acrolein ist jedoch nicht mehr vorhanden.

Innerhalb 1 bis 2 d bei Raumtemperatur verschwindet der Schwefelwasserstoffgeruch vollständig, und es entsteht eine geruchsfreie Lösung. Der Schwefelwasserstoff reagiert praktisch quantitativ unter Desodorierung mit dem Acrolein/Formaldehyd-Polykondensat.

*Beispiel 6*

Es wird in 100 cm³ destilliertem Wasser unter analogen Bedingungen gearbeitet wie in Beispiel 5, jedoch wird zusätzlich zu 120 mg Natriumsulfid (Na$_2$S · 9$H_2$O, M = 240) und 36 mg Salzsäure (M = 36) eine Menge von 140 mg Eisensulfat ($FeSO_4$ · 7$H_2$O, M = 278) durch geeignete Verdünnungszugabe gelöst. Es bildet sich sofort eine schwarze feinteilige Fällung von Eisensulfid. Die Lösung riecht auch weiterhin nach Schwefelwasserstoff, der noch im Gleichgewicht neben Eisensulfid vorliegt.

Analog Beispiel 5 werden wiederum 176 mg des Lösungspolykondensats zugegeben. Zur Herstellung dieser Polykondensatmenge wurden 56 mg Acrolein (M = 56) benötigt. Freies Acrolein liegt im Polykondensat jedoch nicht mehr vor.

Durch Reaktion des Schwefelwasserstoffs, auch aus dem hydrolysierenden Eisensulfid (FeS), mit dem Polykondensat entsteht nach 1 bis 2 d bei Raumtemperatur eine geruchsfreie Lösung mit rostbraunem Eisenhydroxidniederschlag, der aus dem Eisensulfid entstanden ist.

**Patentanspruch**

Verwendung von Polykondensationsprodukten, welche durch Kondensation von Acrolein und Formaldehyd im molaren Verhältnis zwischen 1:1 und 1:10 in wässerigem oder wässerig-organischem Medium in Gegenwart eines basischen Katalysators hergestellt worden sind, zur Beseitigung von Schwefelwasserstoff und Eisensulfid in wässerigen Systemen.

**Claim**

The use of polycondensation products which are produced by condensation of acrolein and formaldehyde in a molar ratio of from 1:1 to 1:10 in an aqueous or aqueous-organic medium in the presence of a basic catalyst, for removing hydrogen sulphide and iron sulphide in aqueous systems.

**Revendication**

Utilisation de produits de polycondensation qui ont été préparés par condensation d'acroléine et de formol dans un rapport molaire se situant entre 1:1 et 1:10 dans un milieu aqueux ou hydro-organique, en présence d'un catalyseur basique, pour l'élimination de l'hydrogène sulfuré et du sulfure de fer de systèmes aqueux.